# EUROPEAN PATENT APPLICATION

(11) **EP 4 814 847 A1**
(43) Date of publication of application: **30.09.2026**
(21) Application number: 25214565.1
(22) Date of filing: 10.11.2025
(51) Int. Cl.: G06Q 30/0241, G06Q 30/0242, G06Q 30/0251, G06Q 50/00

(54) **METHOD FOR TRACKING MESSAGING ADVERTISEMENTS**

(30) Priority: 27.03.2025 US 202519092972
(71) Applicant: Bytedance Technology Ltd., KY1 - 1205 Grand Cayman Cayman Islands (KY)
(72) Inventor: LI, Jingsong, Beijing, 100028 (CN); WU, Junmin, Beijing, 100028 (CN); YI, Xiao, 018960 Singapore (SG); GUO, Shilong, Beijing, 100028 (CN); YE, Hao, 018960 Singapore (SG)
(74) Representative: Marks & Clerk LLP

(57) **Abstract**

Methods, systems, and apparatus, including computer programs encoded on computer storage media, for tracking messaging advertisements. One example method includes: generating, at an advertising software platform, an advertisement comprising a deeplink, the deeplink comprising a placeholder; replacing, by an advertising pack service, the placeholder with a tracking parameter; in response to receiving a user action associated with the advertisement, activating, using the deeplink, an external software application; and in response to an event communicating with an advertiser using the external software application, obtaining, using an event application programming interface and from a message management software application, the event and information corresponding to the tracking parameter, wherein the message management software application obtains the event and the information corresponding to the tracking parameter from the external software application.

## Description

### TECHNICAL FIELD

This specification relates to tracking messaging advertisements, and in particular, to tracking messaging advertisements that direct users to an external software application for subsequent actions.

### BACKGROUND

Messaging advertisement is a type of advertisement that allows advertisers to promote account links of external software applications, such as instant message applications (IMA), such as META MESSENGER and WHATSAPP. By using the messaging advertisements, the advertisers can direct their target customers to the external software applications, and the target customers can then directly have conversations with the advertisers on the external software applications.

### SUMMARY

This specification describes technologies for tracking messaging advertisements that direct users to an external software application for subsequent actions.

According to a first aspect, a computer-implemented method is provided. The method includes: generating, at an advertising software platform, an advertisement including a deeplink, the deeplink including a placeholder; replacing, by an advertising pack service, the placeholder with a tracking parameter; in response to receiving a user action associated with the advertisement, activating, using the deeplink, an external software application; and in response to an event communicating with an advertiser using the external software application, obtaining, using an event application programming interface and from a message management software application, the event and information corresponding to the tracking parameter, wherein the message management software application obtains the event and the information corresponding to the tracking parameter from the external software application.

With reference to the first aspect, in some implementations, the replacing, by the advertising pack service, the placeholder with a tracking parameter includes: determining the tracking parameter based on content of the advertisement and a destination of the advertisement; and sending the advertisement including the deeplink with the tracking parameter to the destination of the advertisement.

With reference to the first aspect, in some implementations, the user action is to click a call-to-action (CTA) button displayed along with the advertisement.

With reference to the first aspect, in some implementations, the external software application is an instant message application (IMA).

With reference to the first aspect, in some implementations, the activating, using the deeplink, an external software application includes: pre-filling, at the external software application, an input box with predetermined text, wherein the predetermined text includes the information corresponding to the tracking parameter.

With reference to the first aspect, in some implementations, the event communicating with an advertiser using the external software application includes: sending the predetermined text to the advertiser.

With reference to the first aspect, in some implementations, an account created at the external software application is authorized to the message management software application. In these implementations, the message management software application obtains the event and the information corresponding to the tracking parameter from the external software application includes: obtaining, using a webhook and from the external software application, the event; and obtaining the information corresponding to the tracking parameter from the event.

With reference to the first aspect, in some implementations, the computer-implemented method according to the first aspect further includes: associating, using the tracking parameter, the event and the user action.

According to a second aspect, a computer-implemented system is provided. The computer-implemented system includes: an advertising software platform, configured to generate an advertisement including a deeplink, the deeplink including a placeholder; an advertising pack service, configured to replace the placeholder with a tracking parameter; and an event application programming interface, configured to obtain, in response to an event communicating with an advertiser using an external software application, the event and information corresponding to the tracking parameter from a message management software application, wherein the external software application is activated using the deeplink in response to a user action associated with the advertisement, and the message management software application obtains the event and the information corresponding to the tracking parameter from the external software application.

With reference to the second aspect, in some implementations, the advertising pack service is further configured to: determine the tracking parameter based on content of the advertisement and a destination of the advertisement; and send the advertisement including the deeplink with the tracking parameter to the destination of the advertisement.

With reference to the second aspect, in some implementations, the user action is to click a call-to-action (CTA) button displayed along with the advertisement.

With reference to the second aspect, in some implementations, the external software application is an instant message application (IMA).

With reference to the second aspect, in some implementations, the external software application is pre-filled with predetermined text in an input box. In these implementations, the predetermined text includes the information corresponding to the tracking parameter.

With reference to the second aspect, in some implementations, the event communicating with an advertiser using the external software application includes: sending the predetermined text to the advertiser.

With reference to the second aspect, in some implementations, an account created at the external software application is authorized to the message management software application. In these implementations, the message management software application obtains, using a webhook, the event from the external software application, and obtains the information corresponding to the tracking parameter from the event.

With reference to the second aspect, in some implementations, the computer-implemented system according to the second aspect further includes: a server, configured to associate, using the tracking parameter, the event and the user action.

According to a third aspect, one or more computer-readable storage media is provided. The one or more computer-readable storage media stores one or more instructions that, when executable by one or more computers, cause the one or more computers to perform the method according to the first aspect or one or more implementations of the first aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a schematic diagram of a working principle of an example messaging advertisement.
FIGS. 2A and 2B illustrates a workflow of tracking messaging advertisements according to an example embodiment of the present disclosure.
FIG. 3 is a system for tracking messaging advertisements.
FIG. 4 is a flowchart of an example process for tracking messaging advertisements using a tracking parameter.
FIG. 5 is an example computing system.

Like reference numbers and designations in the various drawings indicate like elements.

### DETAILED DESCRIPTION

The following detailed description describes tracking messaging advertisements and is presented to enable any person skilled in the art to make and use the disclosed subject matter in the context of one or more particular implementations. Various modifications, alterations, and permutations of the disclosed implementations can be made and will be readily apparent to those of ordinary skill in the art, and the general principles defined can be applied to other implementations and applications, without departing from the scope of the present disclosure. In some instances, one or more technical details that are unnecessary to obtain an understanding of the described subject matter and that are within the skill of one of ordinary skill in the art may be omitted so as to not obscure one or more described implementations. The present disclosure is not intended to be limited to the described or illustrated implementations, but to be accorded the widest scope consistent with the described principles and features.

Messaging advertisements is a type of advertisement that allows advertisers to promote account links of external software applications, such as instant message applications (IMA), like META MESSENGER and WHATSAPP. By using the messaging advertisements, the advertisers can redirect their target customers to the external software applications, and the target customers can then directly have conversations with the advertisers on the external software applications, which facilitates subsequent conversion behaviors, such as order placements and store visits. Therefore, more advertisers are willing to put messaging advertisements on various platforms, for example, social media platforms, video platforms, etc.

As an example, a messaging advertisement of an advertiser is posted on a social media platform and viewed by a user. When the user clicks on, for example, a call-to-action (CTA) button on the messaging advertisement, the user will be redirected to such as the advertiser's account of an instant message application. Then, the user can directly have conversations with the advertisers in that instant message application, and these conversations may be further transformed into behaviors such as placing orders and making an appointment to visit stores.

Tracking the overall process of messaging advertisements has important commercial value. However, when an advertiser puts messaging advertisements on, for example, a social media platform, user behaviors corresponding to the messaging advertisements can be tracked, by the social media platform, only within the social medial platform. In other words, the advertisers can only obtain information about the user behaviors corresponding to the messaging advertisements occurring within the social media platform. After the user clicks on the CTA button on the messaging advertisement and is redirected to the external software applications, since subsequent user behaviors are performed on the external software applications, rather than the social medial platform, the subsequent user behaviors cannot be tracked. Thus, it is crucial to track user behaviors that are performed on the external software applications and that correspond to the messaging advertisements, so as to evaluate the delivery performance of the massaging advertisements and further optimize the delivery model.

Techniques described in this disclosure can help provide techniques for tracking messaging advertisements that direct users to an external software application for subsequent actions. In some implementations, the described techniques can track user behaviors that are performed on the external software applications and corresponds to the messaging advertisements by causing the deeplink of the messaging advertisements to include a tracking parameter.

As an example method of the present disclosure, in some implementations, an advertisement with a deeplink may be generated at an advertising software platform. The deeplink includes a placeholder. In some implementations, the placeholder may be replaced with a tracking parameter by an advertising pack service. In some implementations, in response to receiving a user action associated with the advertisement, an external software application may be activated using the deeplink. In some implementations, in response to an event communicating with an advertiser using the external software application, the event and the information corresponding to the tracking parameter may be obtained, by a message management software application, from the external software application, and the event and information corresponding to the tracking parameter may be further obtained from the message management software application using an event application programming interface.

The described techniques can achieve one or more technical benefits/advantages. In some implementations, the described techniques allow tracking the user behaviors that are performed on the external software applications and corresponds to the messaging advertisements. For example, by generating an advertisement with a deeplink that includes a placeholder and replacing the placeholder with a tracking parameter, the described techniques can permit the user behaviors that are performed on the external software applications and that correspond to the messaging advertisements to be tracked based on the tracking parameter. In some implementations, the described techniques can facilitate the advertisement delivery model training and optimize the advertisement delivery effects. For example, by obtaining the event that communicates with an advertiser using the external software application, the described techniques may associate the event with a user action associated with the advertisement, so as to attribute the event to the user action, and thereby estimate the delivery effect of the advertisement. In some implementations, different or additional advantages can be achieved.

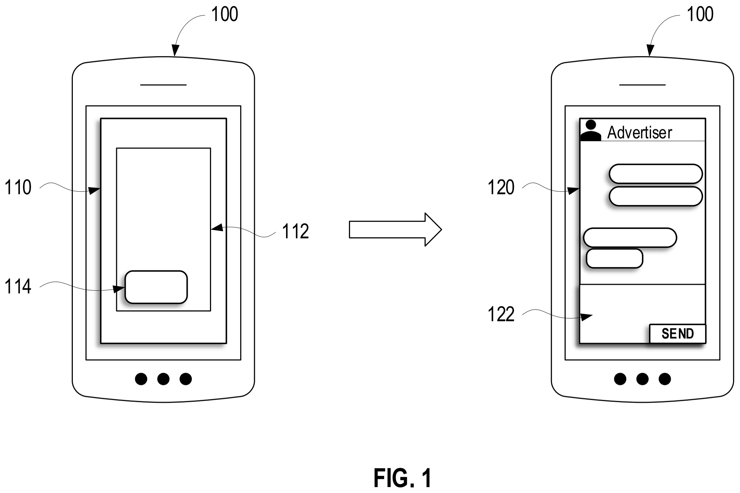

FIG. 1 is a schematic diagram of a working principle of an example messaging advertisement. As shown in FIG. 1, an example messaging advertisement 112 with a CTA button 114 is displayed on a first software application 110 of a personal device 100. In some implementations, the personal device 100 can be, for example, a mobile phone, a tablet computer, a laptop, etc. In some implementations, the first software application 110 can be a social media platform or a video platform.

In some implementations, when a user of the first software application 110 clicks the CTA button 114, the user will be redirected to a second software application 120 (hereinafter also called as external software application). In some implementations, the second software application is an instant message application (IMA) including an input box 122, so that the user can have a conversation with the advertiser of the messaging advertisement 112 directly on IMA. Therefore, messaging advertisements allow advertisers to redirect users interested in the advertised products to private conversations, facilitating subsequent conversion behaviors such as order placements and store visits.

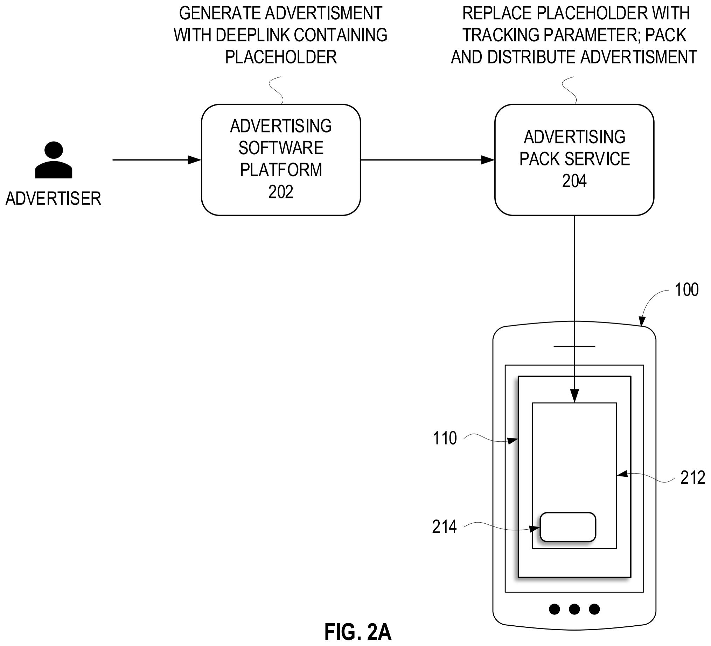

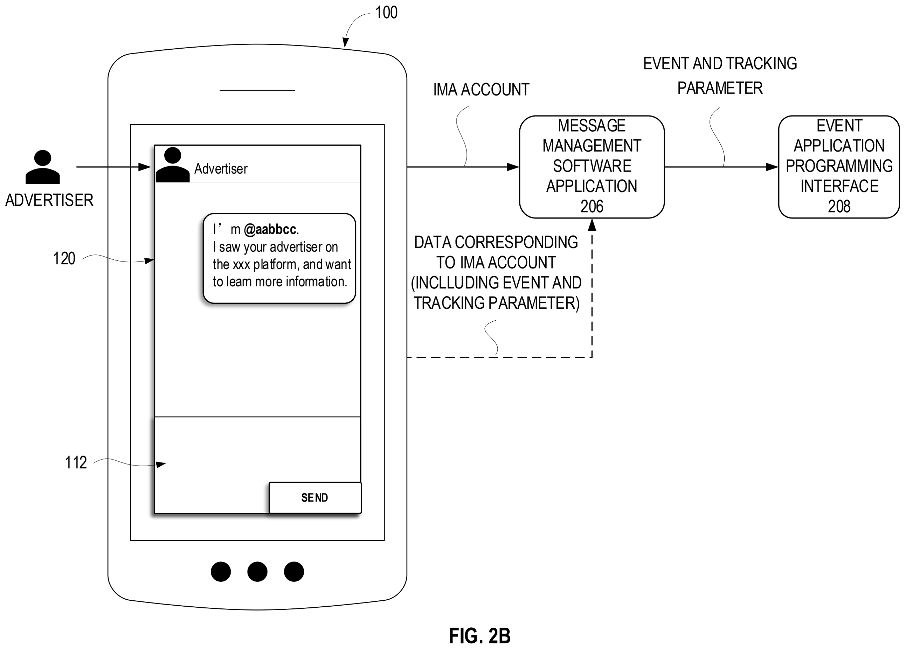

FIGS. 2A and 2B illustrates a workflow of tracking messaging advertisements according to an example embodiment of the present disclosure. In some implementations, an advertiser may generate a messaging advertisement with a deeplink, and cause the deeplink to include a tracking parameter.

Referring to FIG. 2A, an advertiser may generate a messaging advertisement with a deeplink on an advertising software platform 202. In some implementations, the advertising software platform 202 is a platform for advertisers to create advertisements. By providing the advertising software platform 202 with information such as products to be advertised, presentation format, placement type, the advertiser's IMA account and type of IMA, the advertising software platform 202 may generate a messaging advertisement with a deeplink that directs the user to access the IMA. In some implementations, the deeplink contains a placeholder. The placeholder is for later placement of parameters for tracking the messaging advertisement. In some implementations, the advertiser also provides the advertising software platform 202 with preferences of target customer to ensure that the messaging advertisement is later viewed by a particular group of users. In some implementations, the advertising software platform 202 includes an advertisement pool for storing the generated messaging advertisements.

In some implementations, an advertising pack service is then used to pack and distribute the messaging advertisements to a user, such as a user of the first software application 110. For example, in response to the user refreshing the content displayed on the first software application 110 or requesting to display new content on the first software application 110, the advertising pack service packs one or more messaging advertisements, and distributes the one or more messaging advertisements to the user.

In order to track these messaging advertisements, in some implementations, before distributing the messaging advertisements to the user, for each messaging advertisement, the advertising pack service replaces the placeholder in the deeplink of the messaging advertisement with a tracking parameter. The placeholder in the deeplink of the generated messaging advertisement from the advertising software platform 202 is replaced with a tracking parameter at an advertising pack service 204. For example, the advertising software platform 202 sends the generated messaging advertisement to the advertising pack service 204, and the advertising pack service 204 replaces the placeholder in the deeplink of the messaging advertisement with the tracking parameter. The tracking parameter is used to identify the user to whom the messaging advertisement will be distributed. In some implementations, the tracking parameter is determined, by the advertising pack service 204, based on the content of the messaging advertisement and the user to whom the messaging advertisement will be distributed.

In some implementations, the messaging advertisement with the deeplink containing the tracking parameter is distributed and displayed to the user. For example, the advertising pack service 204 may send the packed one or more messaging advertisements to an application feed of the first software application 110, so that the one or more messaging advertisements can start to be distributed within the application feed and displayed to the user of the first software application 110. A messaging advertisement 212 is packed and distributed by the advertising pack service 204 and displayed on the first software application 110.

In some implementations, a CTA button 214 is displayed along with the messaging advertisement 212. The user of the first software application 110 can click the CTA button 214 and be redirected to a destination outside the first software application 110, such as the external software application 120 as shown in FIG. 1. In some implementation, the external software application 120 is the IMA, such as Messenger and WhatsApp. For example, after the user clicks the CTA button 214 on the messaging advertisement, IMA 120 is activated using the deeplink, and the user is redirected to the IMA 120. The user can then send message directly to the advertisers in the IMA 120.

In some implementation, upon activating the IMA 120, an input box of the IMA 120 (such as the input box 122 of FIG. 1) is pre-filled with predetermined text that includes information corresponding to the tracking parameter. For example, the predetermined text may include the ID of the user of the first software application 110 and information corresponding to the content of the messaging advertisement. In some implementations, the ID of the user of the first software application 110 and the information corresponding to the content of the messaging advertisement are visible in the predetermined text. In some other implementations, the ID of the user of the first software application 110, or the information corresponding to the content of the messaging advertisement, or both are invisible in the predetermined text.

In some implementation, the advertiser has an IMA account, and the IMA account is authorized to a message management software application, such as a message management tool (MMT) for managing IMA accounts of the advertiser. In some implementations, the advertiser may authorize their accounts of different types of IMA to the MMT, so that the advertiser can use the MMT to manage their IMA accounts, such as having conversations and offering orders in the corresponding IMA. In some implementations, since the advertiser has authorized their IMA accounts to the message management software application, the message management software application is able to obtain data corresponding to the authorized IMA accounts.

Referring to FIG. 2B, the advertiser authorizes their account of the external software application 120 to the message management software application 206. As a result, data corresponding to the account of the external software application 120 is obtained by the message management software application 206, for example, through the webhook of the external software application 120.

In some implementations, the data obtained by the message management software application 206 includes events that occur on the external software application 120 and the corresponding content. For example, the user sends the predetermined text pre-filled in the input box 112 to the advertiser. Therefore, the message management software application 206 obtains an event that communicating with the advertiser using the external software application 120, as well as the content of the predetermined text sent to the advertiser.

In some implementations, after the user sends the predetermined text pre-filled in the input box 112 to the advertiser, the user places an order in the external software application 120. In this case, the events obtained by the message management software application 206 will include the event that communicating with the advertiser and the event that placing an order. As mentioned above, since the predetermined text includes information corresponding to the tracking parameter, the message management software application 206 may identify the information corresponding to the tracking parameter from the obtained content of the predetermined text. For example, the message management software application 206 may identify the ID of the user of the first software application 110 and the content of the messaging advertisement from the obtained content of the predetermined text. In some implementations, by identifying the information corresponding to the tracking parameter, the message management software application 206 can recognize the events that occur on the external software application 120 and are related to the user of the first software application 110.

In some implementations, the message management software application 206 sends the events and the information corresponding to the tracking parameter to the event application programming interface (API) 208, as shown in FIG. 2B. For example, the message management software application 206 sends the event of communicating with the advertiser, as well as the identified user ID and the content of the messaging advertisement to the event API 208. In some implementations, the event API 208 and the first software application 110 share the same server. Therefore, the server can associate the event of communicating with the advertiser and a specific user of the first software application using the tracking parameter (such as, the identified user ID), and further combine the event with an action that is associated with the advertisement and performed by the specific user on the first software application (such as, clicking the CTA on the messaging advertisement), so as to contribute the event to the action associated with the advertisement.

From the above, the described techniques allow tracking the events performed on the external software applications and associating the events with a specific user of the first software application by using a tracking parameter included in the deeplink of the messaging advertisement. By further attributing the events to the action that is associated with the messaging advertisement and performed by the specific user, it may facilitate the advertisement delivery model training and optimize the advertisement delivery effects.

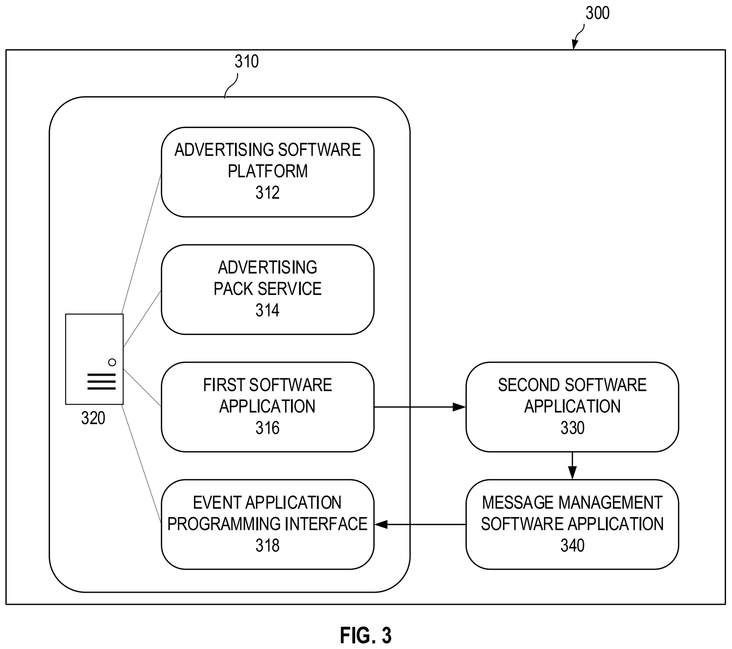

FIG. 3 is a system 300 for tracking messaging advertisements. Referring to FIG. 3, the system 300 includes a subsystem 310, where the subsystem 310 includes an advertising software platform 312, an advertising pack service 314, a first software application 316, and an event application programming interface 318. The subsystem 310 also includes a server 320 that is shared by the advertising software platform 312, the advertising pack service 314, the first software application 316, and the event application programming interface 318.

In some implementations, the advertising software platform 312 is configured to generate advertisements. For example, the advertising software platform 312 may be configured to generate a messaging advertisement with a deeplink, where the deeplink contains a placeholder.

In some implementations, the advertising pack service 314 is configured to determine a tracking parameter and replace the placeholder with the tracking parameter. For example, the advertising pack service 314 may receive the generated messaging advertisement with the deeplink containing the placeholder, determine a tracking parameter based on content of the generated messaging advertisement and a destination of the generated messaging advertisement, and replace the placeholder with the tracking parameter. In some implementations, the advertising pack service 314 is further configured to pack and distribute the advertisements. For example, the advertising pack service 314 may pack the messaging advertisement that includes the deeplink containing the tracking parameter, and send the messaging advertisement to its corresponding destination, such as the first software application 316.

In some implementations, the first software application 316 is configured to display the messaging advertisements to a user. For example, the first software application 316 may display the messaging advertisement along with a CTA button.

In some implementations, the event application programming interface 318 is configured to receive postback signals from outside the subsystem 310. For example, referring to FIG. 3, the system 300 also includes a second software application 330 and a message management software application 340 outside the subsystem 310. The message management software application 340 is configured to obtain data from the second software application 330 through a webhook of the second software application 330. In some implementations, the event application programming interface 318 is configured to obtain events that occur at the second software application 330 from the message management software application 340. The events that occur at the second software application 330 include, such as, the event that communicating using the second software application 330.

In some implementations, the second software application 330 is configured to be activated using the deeplink containing the tracking parameter. In some implementations, the second software application 330 is further configured to be pre-filled with predetermined text in an input box, wherein the predetermined text includes the information corresponding to the tracking parameter. Thereby, in these implementations, the message management software application 340 can obtain the information corresponding to the tracking parameter, and the event application programming interface 318 is configured to further obtain the information corresponding to the tracking parameter from the message management software application 340. In some implementations, the server 320 is configured to associate the event obtained by the event application programming interface 318 and the user action detected by the first software application 316 using the tracking parameter, so as to attribute the event to the user action.

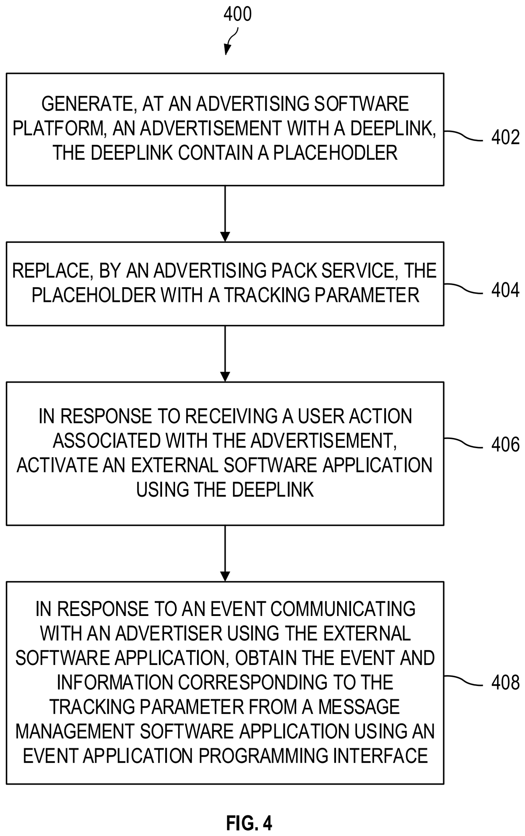

FIG. 4 is a flowchart of an example process 400 for tracking messaging advertisements using a tracking parameter. In some implementations, the example process 400 can be implemented by the system 300 shown in FIG. 3 to track messaging advertisements delivered within the system 300. The operations shown in process 400 may not be exhaustive and that other operations can be performed as well before, after, or in between any of the illustrated operations. Further, some of the operations may be omitted, or performed simultaneously or in a different order than shown in FIG. 4.

At 402, an advertisement with a deeplink is generated at the advertising software platform 312. The deeplink contains a placeholder. In some implementations, the advertising software platform 312 generates a messaging advertisement based on information provided by an advertiser, such as products to be advertised, presentation format, placement type, the advertiser's IMA account and type of IMA. Since the messaging advertisement is generated based on the advertiser's IMA account and type of IMA, the generated messaging advertisement includes a deeplink that directs the user to access the IMA. In some implementation, the deeplink generated by the advertising software platform 312 includes a placeholder for later placement of a tracking parameter for tracking the messaging advertisement.

At 404, the placeholder in the deeplink is replaced, by an advertising pack service 314, with a tracking parameter. In some implementations, the tracking parameter is determined by the advertising pack service 314 based on content of the messaging advertisement and a destination of the messaging advertisement. For example, the messaging advertisement is related to a product A of brand B. The advertising pack service 314 may then determine the tracking parameters based on the product A of brand B and the ID of a specific user to whom the messaging advertisement will be distributed. In some implementations, after the placeholder is replaced by the tracking parameter, the advertising pack service 314 packs and distributes the messaging advertisement whose deeplink contains the tracking parameter to the destination of the messaging advertisement, such as to the specific user of the first software application 316. In this case, when the messaging advertisement is displayed at the first software application 316 and viewed by the specific user, the placeholder in the deeplink of the messaging advertisement has already been replaced by the tracking parameter.

At 406, in response to receiving a user action associated with the advertisement, an external software application (such as the second software application 330) is activated using the deeplink. In some implementations, the messaging advertisement is displayed at the first software application 316 with a CTA button. In this case, the user action associated with the advertisement can be clicking the CTA button. For example, when the specific user sees the messaging advertisement and clicks the CTA button, the specific user can be redirected to another destination according to the deeplink of the messaging advertisement. In some implementations, the other destination is a software application different from the first software application, such as the second software application 330. For example, after the specific user clicks the CTA button, the second software application 330 is activated using the deeplink of the messaging advertisement, and thereby the specific user is redirected to the second software application 330 from the first software application 316.

In some implementations, the second software application 330 is an instant message application (IMA), so that the specific user can use the second software application 330 to have a conversation directly with the advertiser. In some implementations, the IMA includes an input box for user to input message. In some implementations, upon the IMA is activated, the input box of the IMA is pre-filled with predetermined text that includes the information corresponding to the tracking parameter, such as the user ID of that specific user and the content of the content of the messaging advertisement. The specific user can send this predetermined text to the advertiser, so as to launch a conversation in the IMA.

In some implementations, the advertiser may authorize its accounts of several external software applications to a message management software application for managing the accounts. For example, the advertiser may authorize its account of the second software application 330 (such as the IMA account) to the message management software application 340. In this case, the message management software application 340 may obtain data from the second software application 330 using a webhook. For example, in response to the advertiser receiving message from a user in the IMA, the message management software application 340 may obtain, using the webhook, an event of conversation as well as the content involved in the received message. In some implementations, as mentioned above, the user sends the predetermined text that includes the information corresponding to the tracking parameter to the advertiser. In this case, the message received by the advertiser may include information corresponding to the tracking parameter. Thereby, the message management software application 340 may obtain the information corresponding to the tracking parameter from the second software application 330. In some implementations, by identifying information corresponding to the tracking parameter from the received message, the message management software application 340 can determine that the user communicating with the advertiser is from the first software application 316.

At 408, the event that communicating with the advertiser using the external application and the information that corresponds to the tracking parameter is further obtained using the event application programming interface 318 from the message management software application 340. For example, in response to the specific user sending message that including the predetermined text to the advertiser using the IMA, the message management software application 340 obtains the event of conversation and the information that corresponds to the tracking parameter from the IMA, and the event of conversation and the information that corresponds to the tracking parameter may be further obtained, for example, by the server 320, from the message management software application 340 by using the event application programming interface 318.

In some implementations, the server 320 is also shared by the first software application 316. In this case, in response to the server 320 obtaining the event of conversation and the information that corresponds to the tracking parameter, the server 320 may associate, using the tracking parameter, the event and the user action performed on the first software application 316. For example, the server 320 obtains the event of conversation and a user ID from the message management software application 340, the server 320 can first associate the conversation with a specific user of the first software application 316 through the user ID. Further, by determining that specific user has performed an action (such as clicking the CTA button) on the first software application 316, the server 320 can then attribute the event of conversation to the action performed by the specific user on the first software application 316.

In some implementations, events attributed to the action performed on the first software application 316 can be further used, for example, to train advertisement delivery model, optimize the advertisement delivery effect, and the like. Therefore, by using the tracking parameter, the user behaviors that performed outside the first software application and corresponding to the messaging advertisements can be tracked, which is beneficial to effectively distributing messaging advertisements within the first software application and improving the advertising effect.

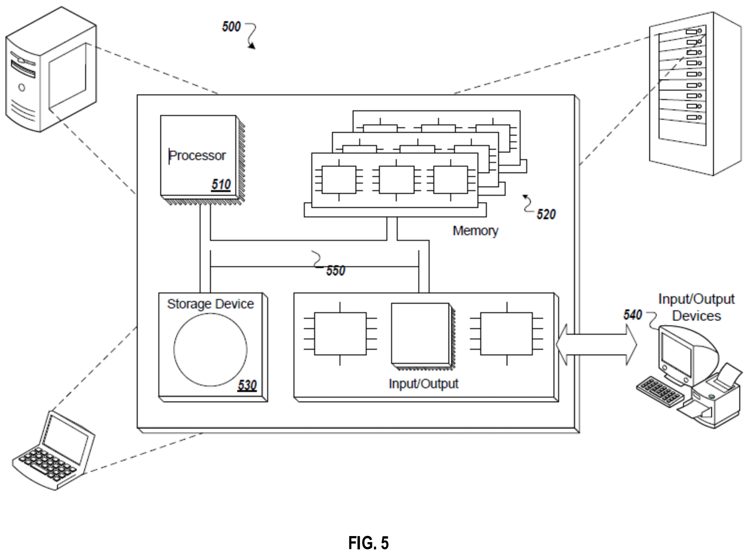

In some implementations, the above process 400 may also be performed by a system of one or more computers (e.g., the computer system 500 of FIG. 5), located in one or more locations, and programmed appropriately in accordance with this specification.

FIG. 5 is an example computer or computer-implemented system 500. The system 500 can be used for the operations described in association with the implementations described herein. For example, the system 500 may be included in computing devices of the one or more online components and/or the one or more offline components. The system 500 includes a processor 510, a memory 520, a storage device 530, and an input/output device 540. The components 510, 520, 530, and 540 are interconnected using a system bus 550. The processor 510 is capable of processing instructions for execution within the system 500. In some implementations, the processor 510 is a single-threaded processor. The processor 510 is a multi-threaded processor. The processor 510 is capable of processing instructions stored in the memory 520 or on the storage device 530 to display graphical information for a user interface on the input/output device 540.

The memory 520 stores information within the system 500. In some implementations, the memory 520 is a computer-readable medium. The memory 520 can be a volatile memory unit or a non-volatile memory unit. The storage device 530 is capable of providing mass storage for the system 500. The storage device 530 is a computer-readable medium. The storage device 530 may be a floppy disk device, a hard disk device, an optical disk device, or a tape device. The input/output device 540 provides input/output operations for the system 500. The input/output device 540 includes a keyboard and/or pointing device. The input/output device 540 includes a display unit for displaying graphical user interfaces.

In this specification the term "engine" will be used broadly to refer to a software based system or subsystem that can perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any disclosure or on the scope of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method (400), comprising:
generating (402), at an advertising software platform (312), an advertisement comprising a deeplink, the deeplink comprising a placeholder;
replacing (404), by an advertising pack service (314), the placeholder with a tracking parameter;
in response to receiving a user action associated with the advertisement, activating (406), using the deeplink, an external software application; and
in response to an event communicating with an advertiser using the external software application, obtaining (408), using an event application programming interface and from a message management software application, the event and information corresponding to the tracking parameter, wherein the message management software application obtains the event and the information corresponding to the tracking parameter from the external software application.

2. The computer-implemented method (400) of claim 1, wherein the replacing (404), by the advertising pack service (314), the placeholder with a tracking parameter comprises:
determining the tracking parameter based on content of the advertisement and a destination of the advertisement; and
sending the advertisement comprising the deeplink with the tracking parameter to the destination of the advertisement.

3. The computer-implemented method (400) of claim 1 or 2, wherein the user action is to click a call-to-action (CTA) button (214) displayed along with the advertisement.

4. The computer-implemented method (400) of any of claims 1 to 3, wherein the external software application is an instant message application (IMA).

5. The computer-implemented method (400) of any of claims 1 to 4, wherein the activating (406), using the deeplink, an external software application comprises:
pre-filling, at the external software application, an input box with predetermined text, wherein the predetermined text comprises the information corresponding to the tracking parameter.

6. The computer-implemented method (400) of claim 5, wherein the event communicating with an advertiser using the external software application comprises:
sending the predetermined text to the advertiser.

7. The computer-implemented method (400) of any of claims 1 to 6, wherein an account created at the external software application is authorized to the message management software application, and wherein the message management software application obtains the event and the information corresponding to the tracking parameter from the external software application comprises:
obtaining, using a webhook and from the external software application, the event; and
obtaining the information corresponding to the tracking parameter from the event.

8. The computer-implemented method (400) of any of claims 1 to 7, further comprising:
associating, using the tracking parameter, the event and the user action.

9. A computer-implemented system (310), comprising:
an advertising software platform (312), configured to generate an advertisement comprising a deeplink, the deeplink comprising a placeholder;
an advertising pack service (314), configured to replace the placeholder with a tracking parameter; and
an event application programming interface (318), configured to obtain, in response to an event communicating with an advertiser using an external software application, the event and information corresponding to the tracking parameter from a message management software application, wherein the external software application is activated using the deeplink in response to a user action associated with the advertisement, and the message management software application obtains the event and the information corresponding to the tracking parameter from the external software application.

10. The computer-implemented system (310) of claim 9, wherein the advertising pack service (314) is further configured to:
determine the tracking parameter based on content of the advertisement and a destination of the advertisement; and
send the advertisement comprising the deeplink with the tracking parameter to the destination of the advertisement.

11. The computer-implemented system (310) of claim 9 or 10, wherein the user action is to click a call-to-action (CTA) button (214) displayed along with the advertisement, and/or
wherein the external software application is an instant message application (IMA).

12. The computer-implemented system (310) of any of claims 9 to 11, wherein the external software application is pre-filled with predetermined text in an input box, and wherein the predetermined text comprises the information corresponding to the tracking parameter,
and optionally wherein the event communicating with an advertiser using the external software application comprises:
sending the predetermined text to the advertiser.

13. The computer-implemented system (310) of any of claims 9 to 12, wherein an account created at the external software application is authorized to the message management software application, and wherein the message management software application obtains, using a webhook, the event from the external software application, and obtains the information corresponding to the tracking parameter from the event.

14. The computer-implemented system (310) of any of claims 9 to 14, further comprising:
a server, configured to associate, using the tracking parameter, the event and the user action.

15. One or more computer-readable storage media storing one or more instructions that, when executable by one or more computers, cause the one or more computers to perform the method of any of claims 1-8.
